# EUROPÄISCHE PATENTSCHRIFT

(11) **EP 1 497 722 B1**
(45) Veröffentlichungstag und Bekanntmachung des Hinweises auf die Patenterteilung: **13.11.2013**
(21) Anmeldenummer: 03717297.0
(22) Anmeldetag: 11.04.2003
(51) Int. Cl.: G06F 9/45

(54) **OPTIMIERUNG VON COMPILERGENERIERTEM PROGRAMMCODE**
OPTIMISATION OF A COMPILER GENERATED PROGRAM CODE
OPTIMISATION D'UN CODE PROGRAMME GENERE PAR COMPILATEUR

(30) Priorität: 15.04.2002 DE 10216602
(43) Veröffentlichungstag der Anmeldung: 19.01.2005
(73) Patentinhaber: Giesecke & Devrient GmbH, 81677 München (DE)
(72) Erfinder: BALDISCHWEILER, Michael, 81825 München (DE); NESS, Werner, 85716 Unterschleissheim (DE)
(86) Internationale Anmeldenummer: PCT/EP2003/003803
(87) Internationale Veröffentlichungsnummer: WO 2003/088039

(56) Entgegenhaltungen:
- FR-A- 2 783 065
- FR-A- 2 785 695
- US-A- 5 903 759
- US-B1- 6 263 429
- ZASTRE: "Compacting Object Code via Parameterized Procedural Abstraction" THESIS, 1993, XP001199580 UNIVERSITY OF VICTORIA

## Beschreibung

Die Erfindung betrifft die Programmierung von tragbaren Datenträgern sowie die Programmausführung durch tragbare Datenträger. Ein tragbarer Datenträger im Sinne des vorliegenden Dokuments kann insbesondere eine Chipkarte (*smart card*) in unterschiedlichen Bauformen oder ein Chipmodul sein.

Tragbare Datenträger, wie sie gegenwärtig üblich sind, weisen einen Prozessorkern und mehrere in unterschiedlichen Technologien gefertigte Speicher auf. In einer typischen Konfiguration sind beispielsweise ein maskenprogrammiertes ROM, ein elektrisch lösch- und programmierbares EEPROM und ein beschreibbares RAM vorgesehen. Das RAM dient als Arbeitsspeicher während des Programmablaufs, während der vom Prozessorkern auszuführende Programmcode im ROM und/oder im EEPROM abgelegt sein kann. Diese und ähnliche Ausgestaltungen von tragbaren Datenträgern sind in Abschnitt 3.4 des Buches "Handbuch der Chipkarten" von W. Rankl und W. Effing, Hanser Verlag, 3. Auflage 1999, beschrieben.

Typischerweise belegt eine Speicherzelle im EEPROM ungefähr die vierfache Chipfläche wie eine ROM-Speicherzelle. Aus Gründen der Flächenersparnis bzw. der höheren verfügbaren Speicherkapazität bei gleicher Fläche ist es daher wünschenswert, den ausführbaren Programmcode möglichst weitgehend im ROM unterzubringen. Allerdings muß der Inhalt des maskenprogrammierten ROM schon bei der Herstellung für große Stückzahlen des Datenträgers unveränderlich festgelegt werden. Das EEPROM wird dagegen erst beim Komplettieren und Initialisieren einer Serie von Datenträgern bzw. beim Personalisieren der einzelnen Datenträger beschrieben. Eine möglichst weitgehende Speicherung des ausführbaren Programmcodes im EEPROM ist daher wegen der höheren Flexibilität vorteilhaft. Dies betrifft sowohl die Programmierung kleinerer Stückzahlen von Datenträgern als auch die Fehlerkorrektur und das Einbringen zusätzlicher Funktionen bei Großserien.

Es besteht daher das Problem, bei der Programmierung von tragbaren Datenträgern einerseits das maskenprogrammierte ROM oder einen vergleichbaren Speicher möglichst weitgehend zu nutzen und andererseits eine möglichst hohe Flexibilität für Programmänderungen und/oder für die Herstellung von Datenträgern in kleineren Stückzahlen zu erzielen.

Erfindungsgemäß wird dieses Problem ganz oder zum Teil gelöst durch ein Verfahren mit den Merkmalen des Anspruchs 1, ein Computerprogrammprodukt gemäß Anspruch 8 und einen tragbaren Datenträger gemäß Anspruch 10. Die abhängigen Ansprüche definieren bevorzugte Ausgestaltungen der Erfindung. Die Aufzählungsreihenfolge der Schritte in den Verfahrensansprüchen soll nicht als Einschränkung des Schutzbereichs verstanden werden. Es sind vielmehr Ausgestaltungen der Erfindung vorgesehen, in denen diese Schritte in anderer Reihenfolge oder ganz oder teilweise parallel oder ganz oder teilweise ineinander verzahnt ausgeführt werden.

Die Erfindung geht von der Grundidee aus, zur Optimierung des Programmcodes eine vordefinierte Bibliothek einzusetzen, die eine Mehrzahl von Bibliotheks-Codefragmenten enthält. In dem erfindungsgemäßen Optimierungsvorgang wird der zu optimierende Programmcode seinerseits nach Programm-Codefragmenten durchsucht, die in ihrer Wirkung oder Funktion je einem Bibliotheks-Codefragment entsprechen. Solche Programm-Codefragmente werden durch je einen Aufruf des entsprechenden Bibliotheks-Codefragments ersetzt. Der optimierte Programmcode wird in einem ersten Speicherbereich des Datenträgers (z.B. im EEPROM) abgelegt, während die Bibliothek zur Speicherung in einem zweiten Speicherbereich (z.B. im ROM) vorgesehen ist.

Der erfindungsgemäße Optimierungsvorgang führte bei von den Erfindern vorgenommenen Tests zu einer deutlichen Reduktion der Größe des für den ersten Speicherbereich vorgesehenen Programmcodes. Dieses Ergebnis ist überraschend, weil man intuitiv annehmen würde, daß sich bei realistischem Umfang der Bibliothek nur wenige Übereinstimmungen von Teilen des Programmcodes mit den Bibliotheks-Codefragmenten ergeben würden.

Die durch die Erfindung bewirkte Verringerung der Codegröße hat zur Folge, daß bei einem Datenträger mit vorgegebener Speicherausstattung Programmcode für zusätzliche Funktionen in den ersten Speicherbereich aufgenommen werden kann. Ist der erste Speicherbereich als EEPROM oder in vergleichbarer Technologie ausgestaltet, so braucht dieser Programmcode erst beim Komplettieren oder Initialisieren oder Personalisieren des Datenträgers geladen zu werden. Eine Änderung oder Neuerstellung des Programmcodes, der wegen seiner Kompaktheit eine Vielzahl von Funktionen implementiert, ist daher erstens schnell und zweitens schon für kleine Stückzahlen von Datenträgern oder sogar für einzelne Datenträger möglich.

Die vordefinierte Bibliothek befindet sich erfingdungsgemäß im zweiten Speicherbereich, also z.B. im maskenprogrammierten ROM. In der Regel ist die durch die erfindungsgemäße Optimierung erzielte Einsparung von Programmcode geringer als die Bibliotheksgröße. Auch in diesem Fall ist jedoch der Einsatz der Erfindung vorteilhaft, weil der wertvolle erste Speicherbereich besser genutzt wird. Falls sich im compilergenerierten Programmcode viele Codefragmente befinden, die jeweils gruppenweise durch je ein einziges Codefragment der Bibliothek ersetzt werden können, und falls die Bibliothek nur wenige nicht benötigte Codefragmente enthält, kann der Programmcode durch die Optimierung sogar um mehr als die Bibliothekslänge schrumpfen. In diesem Fall ist die Verwendung der Erfindung sogar dann vorteilhaft, wenn der erste und der zweite Speicherbereich nur konzeptuelle Abschnitte ein und desselben physischen Speicherfeldes sind.

Erfindungsgemäß wird zur Optimierung nach Programm-Codefragmenten gesucht, also nach Abschnitten im compilergenerierten Programmcode, die sich durch entsprechende Bibliotheks-Codefragmente ersetzen lassen. Bei der Programmerstellung braucht der Programmierer keine Rücksicht auf diesen späteren Optimierungsvorgang zu nehmen; insbesondere braucht er im Programm keine Aufrufe von Bibliotheksroutinen vorzusehen. Die Programmentwicklung wird daher durch die Erfindung in keiner Weise erschwert.

In der hier verwendeten Wortwahl sollen die Begriffe "Programmcode" oder "Codefragment" sowohl ausführbaren Maschinencode vor oder nach dem Binden als auch den entsprechenden Assembler-Quellcode bezeichnen. Mit anderen Worten kann in unterschiedlichen Ausgestaltungen der Erfindung der erfindungsgemäße Optimierungsvorgang sowohl auf Grundlage des compilergenerierten Assembler-Quellcodes als auch auf Grundlage des bereits assemblierten Maschinencodes vorgenommen werden. Im erstgenannten Fall erfolgen die Assemblierung und gegebenenfalls das Binden erst nach der Optimierung. Die Bibliothek kann während der Optimierung ebenfalls als Assembler-Quellcode und/oder als bereits assemblierter Maschinencode vorliegen.

Generell ist eine Ersetzung eines Programm-Codefragments durch ein Bibliotheks-Codefragment immer dann möglich, wenn beide Codefragmente einander entsprechende Funktionen ausführen. Hier können komplexe Berechnungen hinsichtlich der genauen Wirkungen von Codefragmenten vorgenommen werden, um z.B. auch dann einen Ersetzungsvorgang auszulösen, wenn einzelne Instruktionen in den Codefragmenten in einer unschädlichen Weise vertauscht sind. In besonders einfachen Ausführungsbeispielen wird dagegen nur dann eine Ersetzung vorgenommen, wenn die Codefragmente hinsichtlich des durch sie definierten Maschinencodes identisch sind. Auch bei dieser einfachen Ausgestaltung ist jedoch eine gewisse Analyse der Codefragmente erforderlich, weil z.B. ein Codefragment, das einen Sprung mit einem nicht im Codefragment liegenden Sprungziel aufweist, in der Regel nicht ersetzt werden darf.

Zusätzliche Ersetzungsmöglichkeiten ergeben sich, wenn parametrisierte Codefragmente verwendet werden, die ähnlich einem Prozeduraufruf einen oder mehrere Parameter (z.B. Speicheradressen oder Zahlenwerte) enthalten.

Vorzugsweise erfolgt der Aufruf eines Bibliotheks-Codefragments in der Regel durch einen in den Programmcode eingefügten Unterprogramm-Aufrufbefehl. In der Bibliothek ist dann ein unmittelbar auf das Bibliotheks-Codefragment folgender Rücksprungbefehl vorgesehen. Ausnahmen von dieser Regel können in manchen Ausführungsformen dann gelten, wenn das zu ersetzende Codefragment in den Programmfluß eingreift. Falls z.B. das Codefragment mit einem Unterprogramm-Rücksprungbefehl endet, so kann der Aufruf in der Regel mittels eines Sprungbefehls erfolgen.

Die verwendete Bibliothek ist erfindungsgemäß vordefiniert, also nicht von dem im aktuellen Optimierungslauf verarbeiteten Programmcode abhängig. Um möglichst gute Optimierungsergebnisse zu erzielen, ist die Bibliothek jedoch vorzugsweise so gestaltet, daß sie geeignete Einträge für häufig vorkommende Strukturen des Programmcodes enthält. Solche häufig auftretenden Codeabschnitte können insbesondere von der Hardware und/oder einem Betriebssystem des Datenträgers und/oder von einem bei der Erzeugung des compilergenerierten Programmcodes eingesetzten Compiler abhängen.

Das erfindungsgemäß vorgesehene Computerprogrammprodukt kann insbesondere ein computerlesbarer Datenträger wie z.B. ein elektronisches oder magnetisches oder optisches Speichermedium sein, es ist aber nicht auf körperliche Datenträger beschränkt. Auch elektrische oder optische Signale (z.B. Spannungspegel einer Kommunikationsverbindung) sollen im hier verwendeten Sinne als Computerprogrammprodukt aufgefaßt werden. Das Computerprogrammprodukt enthält Programmcode, der die erfindungsgemäßen Optimierungsschritte ausführt. Vorzugsweise enthält das Computerprogrammprodukt ferner einen Compiler und/oder einen Assembler und/oder ein Bindeprogramm und/oder ein Ladeprogramm.

Das erfindungsgemäße Computerprogrammprodukt und der erfindungsgemäße tragbare Datenträger sind bevorzugt mit Merkmalen weitergebildet, die den oben beschriebenen und/oder in den Verfahrensansprüchen genannten Merkmalen entsprechen.

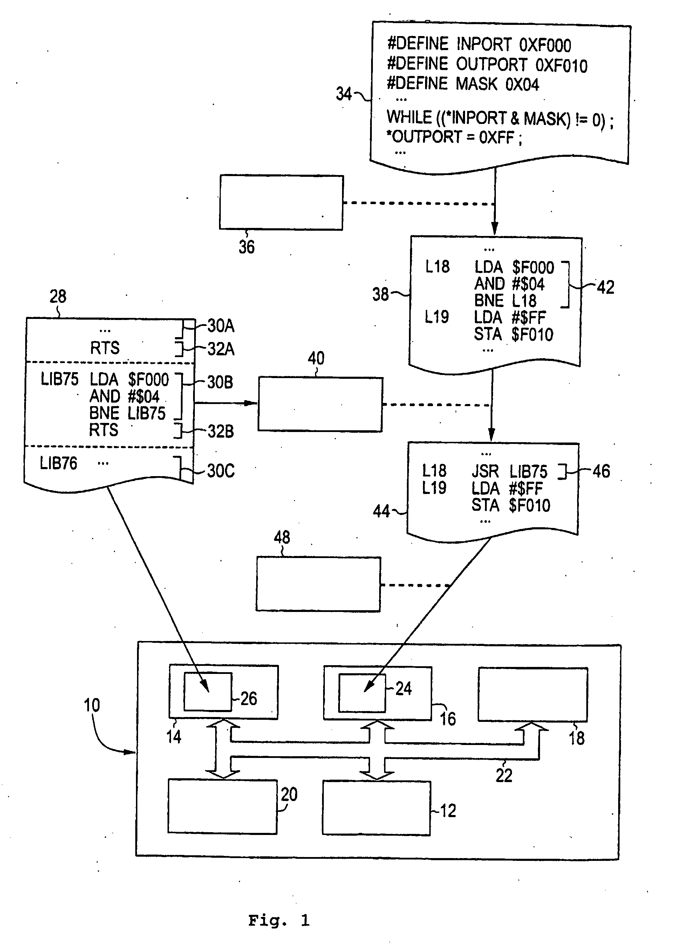

Weitere Merkmale, Aufgaben und Vorteile der Erfindung gehen aus der folgenden Beschreibung eines Ausführungsbeispiels und mehrerer Ausführungsalternativen hervor. Es wird auf die schematische Zeichnung verwiesen, in der die einzige Figur (Fig. 1) eine Darstellung eines tragbaren Datenträgers sowie unterschiedlicher Fassungen des Programmcodes in einem Ausführungsbeispiel der Erfindung zeigt.

Die Erfindung wird bei der Programmierung eines tragbaren Datenträgers 10 eingesetzt, der im hier beschriebenen Ausführungsbeispiel als Chipkarte ausgestaltet ist. In an sich bekannter Weise enthält der Datenträger 10 einen Halbleiterchip mit einem Prozessorkern 12, einem maskenprogrammierten ROM 14, einem EEPROM 16, einem RAM 18 und einer Schnittstelle 20 zur kontaktlosen oder kontaktgebundenen Kommunikation. Die genannten Komponenten sind über einen Bus 22 miteinander verbunden. In Ausführungsalternativen können die drei Speicherfelder 14,16,18 in anderen Technologien ausgestaltet sein; insbesondere kann die Flash-Technologie für das ROM 14 und/oder das EEPROM 16 eingesetzt werden.

In den Speicherfeldern 14,16,18 sind konzeptuell ein erster und ein zweiter Speicherbereich 24, 26 vorgesehen. Der erste Speicherbereich 24 dient zur Aufnahme des optimierten Programmcodes in Form von ausführbarem Maschinencode. Im zweiten Speicherbereich 26 wird eine vordefinierte Bibliothek 28 ebenfalls in Form von ausführbarem Maschinencode abgelegt. Der erste Speicherbereich 24 befindet sich im hier beschriebenen Ausführungsbeispiel im EEPROM 16, und der zweite Speicherbereich 26 befindet sich im ROM 14. In an sich bekannter Weise enthält das ROM 14 außer dem zweiten Speicherbereich 26 weitere, fest vorgegebene Routinen, die z.B. ein Betriebssystem des Datenträgers 10 bilden. Das EEPROM 16 enthält ferner ein Dateisystem für Daten, die nicht-flüchtig im Datenträger 10 gespeichert werden sollen.

Die Bibliothek 28 weist eine Vielzahl von vordefinierten Bibliotheks-Codefragmenten 30A, 30B, 30C, ... auf, die im folgenden allgemein mit 30x bezeichnet werden. In Fig. 1 sind die Bibliotheks-Codefragmente 30x aus Gründen der klareren Darstellung als Assembler-Sourcecode gezeigt. In der Regel folgt auf jedes Bibliotheks-Codefragment 30x unmittelbar ein Unterprogramm-Rücksprungbefeh132A, 32B, ... (im folgenden allgemein mit 32x bezeichnet). Der Unterprogramm-Rücksprungbefehl 32x kann jedoch entfallen, wenn er bei der Ausführung des Bibliotheks-Codefragments 30x nicht erreicht werden kann, weil beispielsweise jeder Programmablauf des Bibliotheks-Codefragments 30x in einem Aussprung oder in einem im Bibliotheks-Codefragment 30x enthaltenen Unterprogramm-Rücksprung endet.

Die Programmentwicklung für den tragbaren Datenträger 10 geht von einem hochsprachlichen Quellcode 34 aus, der in Fig. 1 beispielhaft in der Programmiersprache C dargestellt ist. Der in Fig. 1 gezeigte Ausschnitt wartet, bis das von der Einerstelle aus dritte Bit des Eingaberegisters INPORT den Wert "0" einnimmt, und setzt dann das Ausgaberegister OUTPORT auf den Hexadezimalwert "FF". Ein an sich bekannter Compiler 36 setzt den hochsprachlichen Quellcode 34 in compilergenerierten Programmcode 38 um, der in Fig. 1 in Form von Assembler-Quellcode für den 6805-Befehlssatz dargestellt ist. In Ausführungsalternativen sind andere Befehlssätze, jeweils entsprechend dem Prozessorkern 12, vorgesehen.

Ein Optimierungsprogramm 40 führt die für das vorliegende Ausführungsbeispiel wesentlichen Optimierungsschritte aus. Das Optimierungsprogramm 40 verarbeitet den compilergenerierten Programmcode 38 und greift überdies auf Informationen über die in der Bibliothek 28 enthaltenen Bibliotheks-Codefragmente 30x zu. In unterschiedlichen Ausführungsvarianten kann in diesen Informationen z.B. eine Kopie der Bibliothek 28 im Assembler-Quellcode und/oder eine Kopie der Bibliothek 28 im ausführbaren Maschinencode und/oder eine Spezifikation der Wirkung der einzelnen Bibliotheks-Codefragmente 30x in einer geeigneten Beschreibungssprache enthalten sein. Es können ferner Zusatzinformationen wie z.B. Indizes oder Hash-Tabellen vorgesehen sein, um die vom Optimierungsprogramm 40 vorgenommenen Suchvorgänge zu beschleunigen.

Das Optimierungsprogramm 40 identifiziert im compilergenerierten Programmcode 38 enthaltene Programm-Codefragmente 42, die bei der Ausführung durch den Prozessorkern 12 eine identische Funktion aufweisen wie in der Bibliothek 28 enthaltene Bibliotheks-Codefragmente 30x. Im vorliegenden Ausführungsbeispiel wird dazu ein relativ einfaches Verfahren eingesetzt, bei dem der compilergenerierte Programmcode 38 auf Assembler-Quelltextebene mit den einzelnen Einträgen in der Bibliothek 28 verglichen wird. Hinsichtlich der Befehlskürzel und der Adressen- und Werteangaben kann dabei ein textueller Vergleich stattfinden. Symbolische Sprungziele müssen dagegen vor dem Vergleich in eine standardisierte Form oder in einen numerischen Relativwert umgewandelt werden. In Ausführungsalternativen kann die Optimierung dagegen auf Grundlage eines compilergenerierten Programmcodes 38 erfolgen, der bereits in Form von assembliertem Maschinencode vorliegt.

Ein Programm-Codefragment 42, für das beim Vergleichsvorgang ein entsprechendes Bibliotheks-Codefragment 30x gefunden wurde, wird bei dem Optimierungsvorgang durch einen Aufruf dieses Bibliotheks-Codefragments 30x ersetzt. In Fig. 1 sind beispielsweise das Programm-Codefragment 42 und das Bibliotheks-Codefragment 30B bis auf die symbolische Benennung des Sprungziels identisch. Daher ersetzt das Optimierungsprogramm 40 dieses Programm-Codefragment 42 im optimierten Programmcode 44 durch einen Aufruf des Bibliotheks-Codefragments 30B. Im vorliegenden Beispiel ist dieser Aufruf als Unterprogramm-Aufrufbefehl 46 ausgestaltet. Da das Programm-Codefragment 42 im vorliegenden Beispiel einem Maschinencode von sieben Bytes Länge entspricht und der Unterprogramm-Aufrufbefehl 46 nur drei Bytes benötigt, wurde der für den optimierten Programmcode 44 benötigte Speicherplatz durch die Ersetzung beträchtlich verringert.

Nach Abschluß der Optimierung wird der optimierte Programmcode 44 durch einen Assembler 48 in vom Prozessorkern 12 ausführbaren Maschinencode umgesetzt. Nach einem gegebenenfalls erforderlichen Bindevorgang mit weiteren Programmteilen wird der Code beim Komplettieren oder Initialisieren oder Personalisieren des Datenträgers 10 in den ersten Speicherbereich 24 geladen. Die Bibliothek 28 befindet sich bereits seit der Chipherstellung des Datenträgers 10 im zweiten Speicherbereich 26. Der Datenträger 10 ist damit einsatzbereit. Die oben beschriebenen Übersetzungs-, Optimierungs- und Assemblierungsschritte werden von einem Allzweckcomputer (in Fig. 1 nicht gezeigt) vorgenommen, der den Compiler 36, das Optimierungsprogramm 40 und den Assembler 48 ausführt.

Wenn im Betrieb des Datenträgers 10 die Programmausführung durch den Prozessorkern 12 im ersten Speicherbereich 24 an die Stelle des Unterprogramm-Aufrufbefehls 46 gelangt, wird das Bibliotheks-Codefragment 30B im zweiten Speicherbereich 26 als Unterprogramm ausgeführt. In ihrer Wirkung entsprechen die ausgeführten Instruktionen genau dem bei der Optimierung entfernten Programm-Codefragment 42. Nach der Ausführung dieser Instruktionen führt der Prozessorkern 12 einen durch den Unterprogramm-Rücksprungbefehl 32B ausgelösten Rücksprung an denjenigen Befehl im ersten Speicherbereich 24 aus, der unmittelbar auf den Unterprogramm-Aufrufbefehl 46 folgt.

Bei der Optimierung ist darauf zu achten, daß die Programmfunktionen nicht verändert werden. So sollten beispielsweise Programm-Codefragmente 42 mit Sprungbefehlen, die möglicherweise ein außerhalb des Programm-Codefragments 42 liegendes Sprungziel aufweisen, nur nach genauer Analyse ersetzt werden. Eine Ersetzung ist zulässig, wenn jeder mögliche Ablauf des Programm-Codefragments 42 mit einem Aussprung oder einem Unterprogramm-Rücksprung endet. In diesen Fällen erfolgt der Aufruf des entsprechenden Bibliotheks-Codefragments 30x jedoch nicht mit einem Unterprogramm-Aufrufbefehl, sondern mit einem normalen Sprungbefehl. Diese Überlegungen können auch schon bei der Erstellung der Bibliothek 28 einfließen, so daß diese nur solche Bibliotheks-Codefragmente 30x enthält, deren Verwendung ohne weitere Nebenbedingungen zulässig ist.

Die Bibliothek 28 sollte so aufgebaut werden, daß sie möglichst oft geeignete Bibliotheks-Codefragmente 30x bereitstellt und somit möglichst viele Optimierungsmöglichkeiten bietet. So ist das Bibliotheks-Codefragment 30B von Fig. 1 beispielsweise auf die Hardware-Eigenschaften des Datenträgers 10 abgestimmt. Wenn das in diesem Bibliotheks-Codefragment 30B abgefragte Eingabebit einem häufig benötigten Signalwert entspricht, so ist davon auszugehen, daß sich entsprechende Programm-Codefragmente 42 immer wieder im compilergenerierten Programmcode 42 für die unterschiedlichsten Anwendungen des Datenträgers 10 finden. Auf ähnliche Weise können häufige Betriebssystem-Aufrufe durch entsprechende Bibliotheks-Codefragmente 30x abgedeckt werden. Eine weitere Quelle für sich wiederholende Codefragmente im compilergenerierten Programmcode 38 ergibt sich durch die Tatsache, daß die Codeerzeugung im Compiler 36 schematisch abläuft und daher wiederkehrende Codestrukturen generiert werden.

Insgesamt ist es daher vorteilhaft, zur Erzeugung der Bibliothek 28 den vom Compiler 36 erzeugten Programmcode 38 für eine Vielzahl von Anwendungen, die für die Hardware und das Betriebssystem des Datenträgers 10 vorgesehen sind, statistisch auszuwerten.

## Patentansprüche

1. Verfahren zur Optimierung von compilergeneriertem Programmcode (38), der für einen tragbaren Datenträger (10) mit einem Prozessorkern (12) sowie einem ersten und einem zweiten Speicherbereich (24, 26) vorgesehen ist,
- wobei der erste Speicherbereich (24) zur Aufnahme des optimierten Programmcodes (44) vorgesehen ist,
- wobei der zweite Speicherbereich (26) zur Aufnahme einer Bibliothek (28) mit einer Mehrzahl von Bibliotheks-Codefragmenten (30x) vorgesehen ist,
- wobei der compilergenerierte Programmcode (38) nach Programm-Codefragmenten (42) durchsucht wird, die zumindest hinsichtlich ihrer Wirkung je einem Bibliotheks-Codefragment (30x) entsprechen, wobei die dabei aufgefundenen Programm-Codefragmente (42) durch je einen Aufruf des entsprechenden Bibliotheks-Codefragments (30x) ersetzt werden,
**dadurch gekennzeichnet, dass**
die Bibliothek vordefiniert ist, so dass die Bibliothek nicht von dem im aktuellen Optimierungslauf verarbeiteten Programmcode abhängig ist und für den zweiten Speicherbereich (26) unveränderbar festgelegt wird, bevor der compiler-generierte Programmcode optimiert wird.

2. Verfahren nach Anspruch 1, **dadurch gekennzeichnet, daß** ein Programm-Codefragment (42) nur dann durch ein Bibliotheks-Codefragment (30x) ersetzt wird, wenn beide Codefragmente (42, 30x) in ihrer Form als ausführbarer Maschinencode identisch sind.

3. Verfahren nach Anspruch 1, **dadurch gekennzeichnet, daß** zumindest einige Bibliotheks-Codefragmente (30x) parametrisiert sind.

4. Verfahren nach einem der Ansprüche 1 bis 3, **dadurch gekennzeichnet, daß** ein zu ersetzendes Programm-Codefragment (42) zumindest dann, wenn es nicht in den Programmfluß eingreift, durch einen Unterprogramm-Aufrufbefehl (46) zu dem entsprechenden Bibliotheks-Codefragment (30x) ersetzt wird.

5. Verfahren nach einem der Ansprüche 1 bis 4, **dadurch gekennzeichnet, daß** der compilergenerierte Programmcode (38) in Form von Assembler-Quellcode vorliegt, und daß der Optimierungsvorgang auf Quellcode-Ebene durchgeführt wird.

6. Verfahren nach einem der Ansprüche 1 bis 5, **dadurch gekennzeichnet, daß** die vordefinierte Bibliothek (28) an die Hardware des tragbaren Datenträgers (10) und/oder an ein Betriebssystem des tragbaren Datenträgers (10) und/oder an einen bei der Erzeugung des compilergenerierten Programmcodes (38) eingesetzten Compiler (36) angepaßt ist.

7. Verfahren nach einem der Ansprüche 1 bis 6, **dadurch gekennzeichnet, daß** der erste Speicherbereich (24) elektrisch programmierbar ist, und/oder daß der zweite Speicherbereich (26) maskenprogrammierbar ist, und/oder daß der erste Speicherbereich (24) im tragbaren Datenträger (10) mehr Chipfläche pro Speicherzelle beansprucht als der zweite Speicherbereich (26).

8. Computerprogrammprodukt mit Programminstruktionen für einen Allzweckrechner, die den Allzweckrechner dazu veranlassen, ein Verfahren nach einem der Ansprüche 1 bis 7 auszuführen.

9. Computerprogrammprodukt nach Anspruch 8, **dadurch gekennzeichnet, daß** die Programminstruktionen ferner einen Compiler (36) zum Umsetzen eines hochsprachlichen Quellcodes (34) in den compilergenerierten Programmcode (38) implementieren.

10. Tragbarer Datenträger (10) mit einem Prozessorkern (12), einem ersten Speicherbereich (24) und einem zweiten Speicherbereich (26), wobei in dem ersten Speicherbereich (24) optimierter Programmcode (44) enthalten ist, der durch ein Verfahren nach einem der Ansprüche 1 bis 7 erzeugt wurde, und in dem zweiten Speicherbereich (26) eine unabhängig vom optimierten Programmcode (44) vordefinierte Bibliothek (28) mit einer Mehrzahl von Bibliotheks-Codefragmenten (30x) enthalten ist.

## Claims

1. A method for optimising compiler-generated program code (38) intended for a portable data carrier (10) having both a processor core (12) and a first and a second memory area (24, 26),
- the first memory area (24) being provided to receive the optimised program code (44),
- the second memory area (26) being provided to receive a library (28) having a plurality of library code fragments (30x), and
- the compiler-generated program code (38) being searched for program code fragments (42) which correspond, at least in respect of their effect, to respectively a library code fragment (30x), the program code fragments (42) found thereby being replaced by respectively a call of the corresponding library code fragment (30x),
**characterized in that**
the library is predefined, so that the library does not depend on the program code processed in the current optimisation run and the library is immutably determined for the second memory area (26) before the compiler-generated program code is optimized.

2. The method according to claim 1, **characterized in that** a program code fragment (42) is replaced by a library code fragment (30x) only if both code fragments (42, 30x) are identical in their form as executable machine code.

3. The method according to claim 1, **characterized in that** at least some library code fragments (30x) are parameterised.

4. The method according to any one of claims 1 to 3, **characterized in that** a program code fragment (42) to be replaced is replaced, at least if the program code fragment (42) does not interfere with the program flow, by a subroutine call instruction (46) to the corresponding library code fragment (30x).

5. The method according to any one of claims 1 to 4, **characterized in that** the compiler-generated program code (38) is available in the form of assembler source code, and the optimisation procedure is performed on a source code level.

6. The method according to any one of claims 1 to 5, **characterized in that** the predefined library (28) is matched to the hardware of the portable data carrier (10) and/ or to an operating system of the portable data carrier (10) and/ or to a compiler (36) used in the generation of the compiler-generated program code (38).

7. The method according to any one of claims 1 to 6, **characterized in that** the first memory area (24) is electrically programmable, and/ or the second memory area (26) is mask-programmable, and/or the first memory area (24) occupies more chip area per memory cell in the portable data carrier (10) than is occupied by the second memory area (26).

8. A computer program product comprising program instructions for a general-purpose computer which cause the general-purpose computer to execute a method according to any one of claims 1 to 7.

9. The computer program product according to claim 8, **characterized in that** the program instructions further implement a compiler (36) for converting a high-level language source code (34) into the compiler-generated program code (38).

10. A portable data carrier (10) having a processor core (12), a first memory area (24) and a second memory area (26), there being contained in the first memory area (24) optimised program code (44) generated by a method according to any one of claims 1 to 7, and there being contained in the second memory area (26) a library (28) which is predefined independently of the optimised program code (44) and has a plurality of library code fragments (30x).

## Revendications

1. Procédé pour optimiser un code programme (38) généré par compilateur et destiné à un support de données portable (10) avec un processeur central (12) ainsi qu'une première zone mémoire (24) et une seconde zone mémoire (26),
- selon lequel la première zone mémoire (24) est destinée à l'enregistrement du code programme optimisé (44),
- selon lequel la seconde zone mémoire (26) est destinée à l'enregistrement d'une bibliothèque (28) constituée d'un ensemble de fragments de code de bibliothèque (30x),
- selon lequel le code programme (38) généré par compilateur est balayé à la recherche de fragments de code programme (42) qui au moins au niveau du résultat produit correspondent à un fragment de code de la bibliothèque (30x), et selon lequel les fragments de code programme (42) ainsi répertoriés sont remplacés par un appel au fragment de code de bibliothèque (30x) correspondant,
**caractérisé par le fait que**
la bibliothèque est prédéfinie de sorte qu'elle ne dépende pas du code programme subissant à cette occasion le processus d'optimisation et de sorte qu'elle soit définie et enregistrée un fois pour toutes dans la seconde zone mémoire (26) avant que le code programme généré par compilateur ne soit optimisé.

2. Procédé selon la revendication 1, **caractérisé par le fait qu'**un fragment de code programme (42) n'est remplacé par un fragment de code de la bibliothèque (30x) que si les deux fragments de code (42, 30x) sont identiques en qualité de code machine exécutable.

3. Procédé selon la revendication 1, **caractérisé par le fait qu'**au moins quelques fragments de code de la bibliothèque (30x) sont paramétrés.

4. Procédé selon l'une des revendications 1 à 3, **caractérisé par le fait qu'**un fragment de code programme (42) à remplacer, est remplacé par une instruction d'appel de sous-programme (46) vers le fragment de code de la bibliothèque (30x) correspondant dès lors que cela ne modifie pas le déroulement du programme.

5. Procédé selon l'une des revendications 1 à 4, **caractérisé par le fait que** le code programme (38) généré par le compilateur se présente sous forme de code source en assembleur, et que le processus d'optimisation est exécuté au niveau du code source.

6. Procédé selon l'une des revendications 1 à 5, **caractérisé par le fait que** la bibliothèque prédéfinie (28) est adaptée en fonction du matériel du support de données portable (10) et/ou d'un système d'exploitation du support de données portable (10) et/ou d'un compilateur (36) mis en oeuvre pour produire le code programme (38) généré par compilateur.

7. Procédé selon l'une des revendications 1 à 6, **caractérisé par le fait que** la première zone mémoire (24) est programmable électriquement et/ ou que la seconde zone mémoire (26) est programmable par masque et/ ou que la première zone mémoire (24) dans le support de données portable (10) exige une plus grande surface de circuit par cellule mémoire que la seconde zone mémoire (26).

8. Produit de type logiciel d'ordinateur avec instructions de programme pour un ordinateur générique, permettant à ce type d'ordinateur d'usage général d'exécuter un procédé selon les revendications 1 à 7.

9. Produit de type logiciel d'ordinateur selon la revendication 8, **caractérisé par le fait que** les instructions du programme implémentent ensuite un compilateur (36) de conversion d'un code source standard (34) en code programme (38) généré par le compilateur.

10. Support de données portable (10) avec un processeur central (12), une première zone mémoire (24) et une seconde zone mémoire (26), dans lequel la première zone mémoire (24) contient le code programme optimisé (44), lequel a été produit par un procédé selon les revendications 1 à 7 et dans lequel la seconde zone mémoire (26) contient une bibliothèque prédéfinie (28) indépendante du code programme optimisé (44) et comportant un ensemble de fragments de code de la bibliothèque (30x).
